(19) Europäisches Patentamt
European Patent Office
Office européen des brevets

(11) **EP 4 261 726 A1**

(12) **EUROPÄISCHE PATENTANMELDUNG**

(43) Veröffentlichungstag:
18.10.2023 Patentblatt 2023/42

(21) Anmeldenummer: 22167813.9

(22) Anmeldetag: **12.04.2022**

(51) Internationale Patentklassifikation (IPC):
*G06F 21/64* (2013.01)   *H04L 9/32* (2006.01)
*H04L 9/00* (2022.01)    *G06F 21/60* (2013.01)
*G06F 21/62* (2013.01)   *G06F 3/06* (2006.01)

(52) Gemeinsame Patentklassifikation (CPC):
**G06F 21/64; G06F 3/067; G06F 21/606;
G06F 21/6236; H04L 9/3247; H04L 9/50**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder:
• **Falk, Rainer
85586 Poing (DE)**

• **Fischer, Kai
85598 Baldham (DE)**
• **Fries, Steffen
85598 Baldham (DE)**
• **Heintel, Markus
81377 München (DE)**
• **Klasen, Wolfgang
85521 Ottobrunn (DE)**
• **Maftun, Aliza
81247 München (DE)**

(74) Vertreter: **Siemens Patent Attorneys
Postfach 22 16 34
80506 München (DE)**

(54) **VERWALTEN VON EREIGNISDATEN EINES REALEN OBJEKTS IN EINER VERWALTUNGSSCHALE**

(57)    Die Erfindung betrifft zwei korrespondierende Verfahren zum Verwalten von Ereignisdaten (231) eines realen Objekts (2) in einer Verwaltungsschale (41) des realen Objekts (2), ein Verfahren aus Sicht des realen Objekts (2) und ein Verfahren aus Sicht der Verwaltungsschale (41). Außerdem betrifft die Erfindung ein zugehöriges reales Objekt (2) und eine zugehörige Verwaltungsschale (41).

Aus Sicht des realen Objekts (2) umfasst das Verfahren die Schritte:
- Ein Aufbauen eines Vertrauensverhältnisses zwischen dem realen Objekt (2) und der Verwaltungsschale (41) des realen Objekts (2),
- Ein Abruf von Ereignisdaten von einem Speicher (22) des realen Objekts (2), wobei die Ereignisdaten eine zusammenhängende Folge an Ereignissen angeben,
- Ein Erstellen eines Integritätsschutz und gegebenenfalls eine Verschlüsselung der Ereignisdaten in Abhängigkeit des Vertrauensverhältnisses wodurch kryptographisch geschützte Ereignisdaten (231) gebildet werden,
- Ein Senden der kryptographisch geschützten Ereignisdaten (231) an die Verwaltungsschale (41),
- Ein Empfangen einer kryptographisch geschützten Empfangsbestätigung (411) von der Verwaltungsschale (41), wobei die Empfangsbestätigung (411) angibt, dass die kryptographisch geschützten Ereignisdaten (231) von der Verwaltungsschale (41) empfangen wurden und

- Ein Löschen der Ereignisdaten (231) aus dem Speicher (22) des realen Objekts (2) in Abhängigkeit der Empfangsbestätigung (411).

FIG 1

EP 4 261 726 A1

**Beschreibung**

HINTERGRUND DER ERFINDUNG

Gebiet der Erfindung

Die vorliegende Erfindung betrifft zwei korrespondierende Verfahren zum Verwalten von Ereignisdaten eines realen Objekts in einer Verwaltungsschale des realen Objekts, ein Verfahren aus Sicht des realen Objekts und ein Verfahren aus Sicht der Verwaltungsschale. Außerdem betrifft die Erfindung ein zugehöriges reales Objekt und eine zugehörige Verwaltungsschale.

Beschreibung des Stands der Technik

Unter einem digitalen Zwilling (digital twin, DT) wird ein virtuelles, digitales Abbild eines realen Objekts, insbesondere eines Geräts, eines eigebetteten Systems, einer Maschine oder einer Anlage verstanden. In der Automatisierungsindustrie wird ein digitaler Zwilling auch als Verwaltungsschale oder Asset Administration Shell bezeichnet. Der digitale Zwilling befindet sich auf einem IoT-System und kann unter einer Adresse, z.B. einer IP-Adresse, DNS-Name, URL über ein Kommunikationsnetzwerk erreicht werden.

Ein digitaler Zwilling verarbeitet oftmals sensible Daten des realen Objekts, für die insbesondere Integrität und gegebenenfalls Vertraulichkeit geschützt werden müssen. Ein digitaler Zwilling unterliegt oftmals weniger strengen Randbedingungen bezüglich der verfügbaren Ressourcen, insbesondere Speicherplatz und CPU-Leistung, als das reale Objekt.

Für ein reales Objekt bestehen Anforderungen, Daten, z.B. Trace- und Logging-Informationen, auch als Ereignisprotokolle oder Ereignisdaten bezeichenbar, über sicherheitsrelevante Events zu speichern. Da der Speicherplatz hierzu begrenzt ist, definieren Standards eine Mindestanzahl von Logging-Einträgen, die ein reales Objekt speichern muss, sowie eine Strategie für das Überschreiben älterer Logging-Daten, wenn im Speicher nicht mehr ausreichend Platz zur Verfügung steht. Dies ist z.B. in IEEE 1686 (IEEE Standard for Intelligent Electronic Devices Cyber Security Capabilities) beschrieben. Hier ist eine Anzahl von 4096 Einträgen spezifiziert, bevor ältere Einträge überschrieben werden dürfen. Unter Linux sind Tools wie logrotate bekannt. Logrotate rotiert und komprimiert Systemlogdateien. Auch hier werden die ältesten Dateien nach einer bestimmten Zeit überschrieben. Logrotate kann die älteste Datei vor dem Löschen an einen Server per mail senden.

Logging Dienste wie Linux syslog oder Windows Event Manager/Windows Event Collector Service sind in der Lage lokale Trace- und Logging-Informationen an einer zentralen Stelle zu sammeln. Eine Absicherung der Kommunikation kann dabei entweder über zusätzliche Maßnahmen (VPN, SSH) oder über integrierte Sicherheitsmechanismen erreicht werden.

Der Nachteil ist, dass dieses Überschreiben im Falle eines Angriffs auf das Gerät eine forensische Analyse erschweren oder auch beim Auswerten eines Audit-Trails kann, da unter Umständen nicht mehr alle relevanten Daten zur Rekonstruktion eines Vorfalls bereitgestellt werden können.

Die Aufgabe der Erfindung besteht darin, eine Lösung bereitzustellen, welche verhindert, dass sicherheitsrelevante Informationen wie Trace-, Logging- oder Audit-Trail-Informationen durch ein Gerät gelöscht werden müssen und damit für weitere Analysen verloren gehen.

ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren aus Sicht des realen Objekts zum Verwalten von Ereignisdaten eines realen Objekts durch eine Verwaltungsschale des realen Objekts, wobei die Verwaltungsschale einen digitalen Zwilling des realen Objekts darstellt.

Das Verfahren zum Verwalten weist die Schritte auf:

- Ein Aufbauen eines Vertrauensverhältnisses zwischen dem realen Objekt und der Verwaltungsschale des realen Objekts,
- Ein Abruf von Ereignisdaten von einem Speicher des realen Objekts, wobei die Ereignisdaten eine zusammenhängende Folge an Ereignissen angeben,
- Ein Erstellen eines Integritätsschutz der Ereignisdaten in Abhängigkeit des Vertrauensverhältnisses wodurch kryptographisch geschützte Ereignisdaten gebildet werden,

- Ein Senden der kryptographisch geschützten Ereignisdaten an die Verwaltungsschale,
- Ein Empfangen einer kryptographisch geschützten Empfangsbestätigung von der Verwaltungsschale, wobei die Empfangsbestätigung angibt, dass die kryptographisch geschützten Ereignisdaten von der Verwaltungsschale empfangen wurden und
- Ein Löschen der Ereignisdaten aus dem Speicher des realen Objektes in Abhängigkeit der Empfangsbestätigung.

Ein Aspekt der Erfindung besteht somit darin, die Aufgabe der Erfindung dadurch zu lösen, dass eine manipulationsgeschützte Auslagerung von Ereignisdaten in einen digitalen Zwilling bereitgestellt wird.

Der Integritätsschutz wird typischerweise als kryptographische Checksumme (insbesondere eine digitale Signatur, HMAC, AES-GMAC) realisiert. Vorzugsweise wird der Integritätsschutz durch eine digitale Signatur realisiert, das heißt die Ereignisdaten werden vorzugsweise digital signiert.

Dabei ist unter dem Vertrauensverhältnis zu verstehen, dass sich das reale Objekt und die Verwaltungsverschale gegenseitig identifizieren und authentisieren können und basierend darauf autorisiert kryptografisch geschützte Informationen austauschen, die sie mit anderen externen (nicht autorisierten) Einheiten nicht austauschen würden. Diese Daten müssen vor dem Zugriff durch einen potenziellen Angreifer geschützt werden. Insbesondere die Ereignisdaten eines realen Objektes sind vor Modifikation und Löschung zu schützen, da ein potenzieller Angreifer sonst seinen Zugriff auf die ausgetauschten Informationen verschleiern kann.

Die Verwaltungsschale kann auch als digitaler Zwilling oder "digital twin" genutzt werden. Die Verwaltungsschale repräsentiert somit ein digitales Abbild des realen Objekts, welches das Verhalten, die Eigenschaften und Reaktionen des realen Objekts kennt und simuliert. Im Vergleich zu einer reinen Simulation hat ein digitaler Zwilling immer sein Zwillingsgegenstück in der realen Welt, welches somit tatsächlich existent ist. Es handelt sich somit nicht um eine reine Simulation. Zusätzlich ist die Verwaltungsschale nach einem erfindungsgemäßen Aspekt ausgebildet, um Daten des realen Objekts zu verwalten.

Unter der zusammenhängenden Folge der Ereignisdaten ist hierbei zu verstehen, dass es sich um eine vollständige, verkettete Folge an Ereignissen handelt, welche erlaubt aufeinanderfolgende Ereignisse und deren Zusammenhänge nachzuvollziehen. Hierbei muss sichergestellt werden, dass die Ereignisdaten lückenlos und nachvollziehbar über einen gegebenen Zeitraum zur Verfügung gestellt werden, um insbesondere einen Audit-Trail oder forensische Analysen im Fehlerfall oder eine nutzungsabhängige Abrechnung zu unterstützen.

Die Ereignisdaten sind mit einem privaten Schlüssel des realen Objektes digital signiert und werden in Form eines Log Data Storage Request (LDSReq) an den digitalen Zwilling über ein Kommunikationsprotokoll, insbesondere ssh, ftp, sftp, TLS, gesendet.

Die Datenstruktur der Ereignisdaten kann insbesondere in Form einer XML, JSON, CBOR Datenstruktur vorliegen.

Die digitale Signatur der Ereignisdaten kann entsprechend der Kodierung der Datenstruktur realisiert werden, insbesondere als XML-Signatur, JSON signed Object oder auch als COSE Objekt.

Die kryptographisch geschützte Empfangsbestätigung sowie auch die unten genannte Vollständigkeitsbestätigung, von der Verwaltungsschale kann insbesondere als eine Storage-Attestation-Information (SAI) ausgebildet sein.

Die Erfindung hat insbesondere den Vorteil, dass durch das Löschen der Ereignisdaten von dem Speicher in Abhängigkeit der Empfangsbestätigung verlässlich verhindert werden kann. Somit kann verhindert werden, dass kritische Ereignisdaten auf dem realen Objekt vorzeitig gelöscht werden.

Eine Anwendungsmöglichkeit der Erfindung ist ein Blackbox-Recorder, insbesondere Juridical Recorder, welcher sicherheitsrelevante Ereignisse erfasst und verlässlich aufzeichnet. Erst nach einer kryptographisch bestätigten Übertragung an die Verwaltungsschale werden lokal gespeicherte Ereignisdaten gelöscht beziehungsweise der Speicher wird freigegeben.

Eine weitere Anwendungsmöglichkeit betrifft die Erfassung von Ereignisdaten in Form von Verbrauchsdaten oder Nutzungsdaten oder Daten für die Ermittlung von KPIs, die für eine nutzungsabhängige Abrechnung verwendet werden. Dadurch kann verhindert werden, dass durch eine Manipulation der Übertragung von solchen Ereignisdaten, insbesondere Logdaten, abrechnungsrelevante Information verlorengeht.

Das reale Objekt prüft eine digitale Signatur der kryptographisch geschützten Empfangsbestätigung. Nach erfolgreicher Prüfung können die übermittelten Ereignisdaten, insbesondere Logging Daten, auf dem realen Objekt gelöscht werden, da die Verwaltungsschale bzw. der digitale Zwilling die Speicherung der Logging Daten bestätigt hat.

Insbesondere kann das Verfahren den weiteren Schritt aufweisen: Abruf einer Speicherinformation von dem Speicher des realen Objekts. Aus der Speicherinformation von dem Speicher des realen Objekts kann insbesondere hervorgehen, dass in absehbarer Zeit nicht mehr genügend Speicherplatz für das Speichern von Logging-Daten zur Verfügung steht.

In einer Weiterbildung weisen die kryptographisch geschützten Ereignisdaten zusätzlich eine Verschlüsselung auf, welche ebenfalls von dem Vertrauensverhältnis abhängig ist.

In einer Weiterbildung der Erfindung basiert das Vertrauensverhältnis auf mindestens einem zugeordneten kryptographischen Schlüsselpaar, wobei das mindestens eine kryptographische Schlüsselpaar einen privaten Schlüssel und einen öffentlichen Schlüssel aufweist.

Zwischen dem realen Objekt und der Verwaltungsschale besteht das Vertrauensverhältnis somit insbesondere auf Basis von zugeordneten Schlüsseln, insbesondere einem oder mehreren asymmetrischen Schlüsselpaaren.

In einer weiteren Weiterbildung der Erfindung wird für den Integritätsschutz der kryptographisch geschützten Ereignisdaten der private Schlüssel des realen Objektes verwendet. Das hat den Vorteil, dass die Integrität basierend auf dem Vertrauensverhältnis stattfindet und die Ereignisdaten weiterhin vor Modifikation weiterer Parteien, insbesondere Angreifern, geschützt sind.

In einer weiteren Weiterbildung der Erfindung wird für den Vertraulichkeitsschutz der Ereignisdaten der öffentliche Schlüssel der Verwaltungsschale verwendet. Die Verschlüsselung kann entweder direkt erfolgen bei Nutzung des RSA Verfahrens oder aber unter Bildung eines geheimen Schlüssels mit Hilfe des öffentlichen Schlüssels der Verwaltungsschale bei Nutzung von ECDH Verfahren. Dies hat den Vorteil, dass der Vertraulichkeitsschutz basierend auf dem Vertrauensverhältnis stattfindet und die Ereignisdaten weiterhin vor Modifikation weiterer Parteien, insbesondere Angreifern, geschützt sind.

In einer alternativen Weiterbildung wird der Ende-zu-Ende Vertraulichkeitsschutz durch die Nutzung eines Verschlüsselungsprotokolls wie z.B. TLS oder auch IPSec realisiert.

In einer weiteren Weiterbildung der Erfindung weist das mindestens eine kryptographische Schlüsselpaar eine das reale Objekt betreffende spezifische Granularität auf. Die zugeordneten Schlüssel können somit verschiedene Granularität aufweisen und insbesondere individuell für ein Gerät, auf Geräteklasse, oder betreiberspezifisch festgelegt sein. Diese zugeordneten Schlüssel ermöglichen insbesondere eine gegenseitige Authentisierung im Kontext eines Kommunikationsaufbaus oder aber auch den Austausch signierter Objekte, um einen Integritätsschutz und auch eine Quellenauthentisierung der Ereignisdaten zu ermöglichen. Verfahren, die hierzu genutzt werden können, sind insbesondere RSA und/oder ECDSA.

In einer weiteren Weiterbildung der Erfindung weist das Verfahren den weiteren Schritt auf:
Ein Empfangen einer kryptographisch geschützten Vollständigkeitsbestätigung bezüglich der Ereignisdaten von der Verwaltungsschale und ein Löschen der gesendeten Ereignisdaten von dem Speicher in Abhängigkeit der Vollständigkeitsbestätigung.

Die Vollständigkeitsbestätigung gibt an, dass die Ereignisdaten von der Verwaltungsschale erfolgreich auf Vollständigkeit im Sinne einer lückenlosen Abfolge von Ereignissen geprüft wurden.

In einer weiteren Weiterbildung der Erfindung weist das Verfahren den weiteren Schritt auf:
Ein Empfangen einer kryptographisch geschützten Übereinstimmungsbestätigung bezüglich der Ereignisdaten von der Verwaltungsschale und ein Löschen der gesendeten Ereignisdaten von dem Speicher in Abhängigkeit der Übereinstimmungsbestätigung.

Die Übereinstimmungsbestätigung gibt an, dass die Art der empfangenden Ereignisdaten von der Verwaltungsschale erfolgreich auf Übereinstimmung mit der Art bisher erhaltener und gespeicherter Ereignisdaten geprüft wurde.

In einer weiteren Weiterbildung der Erfindung sind die kryptographisch geschützten Ereignisdaten:

- Eine Trace-Information und/oder
- Eine Logging-Information und/oder
- Eine Nutzungsinformation und/oder
- Eine Verbrauchsinformation und/oder
- Eine Audit-Trail-Information und/oder
- Eine Information bezüglich eines sicherheitsrelevanten Ereignisses.

In einer weiteren Weiterbildung der Erfindung liegen die kryptographisch geschützten Ereignisdaten in einer Logging Data Struktur (LDS) vor.

Die Logging Data Struktur (LDS) weist vorzugsweise auf:

- eine Identifikation des realen Objektes, insbesondere Objekt-UUID, Objektseriennummer und Objektaussteller eines zugehörigen Objektzertifikates und Objekt-Fingerprint des Objektzertifikates,
- eine Identifikation der Verwaltungsschale, insbesondere Verwaltungsschalen-UUID, Verwaltungsschalenseriennummer und Verwaltungsschalenaussteller des zugehörigen Verwaltungsschalenzertifikates, Verwaltungsschalen-Fingerprint des Verwaltungsschalenzertifikates,
- einen aktuellen Log-Data-Record (LDR), aufweisend:

    o Zeitstempel eines aktuellen Logging-Objektes
    o Logging Informationen (optional komprimiert)

- Fingerprint des aktuellen Log-Data-Record LDRn+1 (z.B. errechnet über eine Hashfunktion)
- Zeitstempel des vorherigen Logging Objektes LDRn
- Fingerprint der bisher kumulierten Logging Objekte (CLDRn)
- Storage-Attestation Information (SAI) des vorherigen Logging-Objektes (wenn vorhanden)
- Optionale Sicherheitsanforderungen bzgl. der Speicherung der Logging Daten (z.B. maximale Zeitdauer, Sicherheitsstatus (verschlüsselt, gesichert (Backup), etc.)
- Optional weitere Informationen des realen Objektes (Gerät) (z.B. aktuelle Firmware-Version, aktuelle Konfiguration, selbst-ermittelter Security-Status). Diese Informationen können auch als sicherer digitaler Fingerprint genutzt werden, welcher z.B. mit Hilfe einer Physically Unclonable Funktion (PUF) abgeleitet wird. Dieser kann zusätzlich dazu genutzt werden, den Missbrauch eines Digitalen Zwillings für ein gefälschtes reales Objekt zu verhindern

In einer weiteren Weiterbildung der Erfindung speichert der Speicher des realen Objekts zusätzlich zweite Ereignisdaten. In dieser Ausführung wird nur ein Teil einer Gesamtmenge an Ereignisdaten, die zuvor genannten Ereignisdaten, an die Verwaltungsschale gesandt. Die zweiten Ereignisdaten bleiben hingegen auf dem Speicher des realen Objekts gespeichert und werden nicht gesendet. Somit kann das erfindungsgemäße Verfahren grundsätzlich auf alle Logeinträge angewandt werden. Vorzugsweise wird es jedoch auf eine besonders kritische Teilmenge von Logeinträgen angewandt, z.B. auf Securitybezogene Log-Einträge.

In einer weiteren Weiterbildung der Erfindung weist das Verfahren den weiteren Schritt auf:

- Ein Prüfen einer Signatur und/oder einer Information der kryptographisch geschützten Empfangsbestätigung durch das reale Objekt.

Nach dieser Ausführungsform prüft das reale Objekt die digitale Signatur sowie die enthaltenen Informationen zum vorherigen und aktuellen Logging-Objekt als Teil der geschützten Empfangsbestätigung. Nach erfolgreicher Prüfung können die übermittelten Logging Daten auf dem realen Objekt gelöscht werden, da der digitale Zwilling die Speicherung der Logging Daten bestätigt hat.

Die Erfindung umfasst außerdem ein reales Objekt, insbesondere ausgebildet als technisches Gerät, eingebettetes System, Maschine oder technische Anlage, zur Ausführung eines erfindungsgemäßen Verfahrens, aufweisend:

- ein Sicherheitselement, ausgebildet ein Vertrauensverhältnis zwischen dem realen Objekt und einer Verwaltungsschale des realen Objekts aufzubauen,
- eine Speichereinheit, ausgebildet Ereignisdaten des realen Objekts zu speichern, wobei die Ereignisdaten eine zusammenhängende Folge an Ereignissen angeben,
- eine Kryptographieverarbeitungseinheit, ausgebildet die Ereignisdaten in Abhängigkeit des Vertrauensverhältnisses zu signieren, wodurch ein Integritätsschutz erstellt wird und ggf., zu verschlüsseln, wodurch eine Verschlüsselung erstellt wird,
  wodurch kryptographisch geschützte Ereignisdaten gebildet werden,
- eine Sendeeinheit, ausgebildet die kryptographisch geschützten Ereignisdaten an die Verwaltungsschale zu senden,
- eine Empfangseinheit, ausgebildet eine kryptographisch geschützte Empfangsbestätigung von der Verwaltungsschale zu empfangen, wobei die Empfangsbestätigung angibt, dass die kryptographisch geschützten Ereignisdaten von der Verwaltungsschale empfangen wurden und
- eine Freigabeeinheit, ausgebildet die Ereignisdaten von dem Speicher in Abhängigkeit der Empfangsbestätigung zu löschen.

Die Erfindung umfasst außerdem ein korrespondierendes Verfahren aus Sicht der Verwaltungsschale zum Verwalten von Ereignisdaten eines realen Objekts durch eine Verwaltungsschale des realen Objekts, wobei die Verwaltungsschale einen digitalen Zwilling des realen Objekts darstellt.

Das Verfahren aus Sicht der Verwaltungsschale umfasst die Schritte:

- Ein Aufbauen eines Vertrauensverhältnisses zwischen dem realen Objekt und der Verwaltungsschale des realen Objekts,
- Ein Empfangen von kryptographisch geschützten Ereignisdaten von dem realen Objekt durch die Verwaltungsschale, wobei die kryptographisch geschützten Ereignisdaten eine zusammenhängende Folge an Ereignissen angeben,
- Ein Prüfen eines Integritätsschutzes und insbesondere eine Entschlüsselung der kryptographisch geschützten Ereignisdaten in Abhängigkeit des Vertrauensverhältnisses,
- Ein Speichern der Ereignisdaten in Abhängigkeit eines Ergebnisses des Prüfens und
- Ein Senden einer kryptographisch geschützten Empfangsbestätigung von der Verwaltungsschale an das reale Objekt, wobei die Empfangsbestätigung angibt, dass die kryptographisch geschützten Ereignisdaten von der Verwaltungsschale empfangen wurden.

In einer Weiterbildung der Erfindung wird von der Verwaltungsschale eine Auswertung der Ereignisdaten vorgenommen.

Außerdem erhält die Verwaltungsschale über die erhaltenen Ereignisdaten zum aktuellen und vorherigen Logging-Objekt auch das Bild des realen Objektes bzgl. des Speicherzustands der Logging-Informationen.

In einer weiteren Weiterbildung der Erfindung umfasst das Verfahren den weiteren Schritt:
Ein Prüfen einer Vollständigkeit der kryptographisch geschützten Ereignisdaten und in Abhängigkeit des Prüfens ein Senden einer kryptographisch geschützten Vollständigkeitsbestätigung, typischerweise als weiterer Teil einer Antwortnachricht (Log Data Storage Response (LDSRes)) über die erfolgreiche Auslagerung.

Nach dieser Ausführungsform prüft die Verwaltungsschale ebenso, dass die Ereignisdaten lückenlos an eine schon vorhandene Logging Datenstruktur für das reale Objekt anschließt.

Die Vollständigkeitsbestätigung gibt an, dass die Ereignisdaten von der Verwaltungsschale erfolgreich auf Vollständigkeit im Sinne einer lückenlosen Abfolge von Ereignissen empfangen wurden.

In einer weiteren Weiterbildung der Erfindung umfasst das Verfahren den weiteren Schritt:
Ein Prüfen einer Übereinstimmung der kryptographisch geschützten Ereignisdaten und in Abhängigkeit des Prüfens ein Senden einer kryptographisch geschützten Übereinstimmungsbestätigung, typischerweise als weiterer Teil einer Antwortnachricht (Log Data Storage Response (LDSRes)) über die erfolgreiche Auslagerung.

Die Übereinstimmungsbestätigung gibt an, dass die Art der empfangenden Ereignisdaten von der Verwaltungsschale erfolgreich auf Übereinstimmung mit der Art bisher erhaltener und gespeicherter Ereignisdaten geprüft wurde.

Nach erfolgreicher Prüfung stellt die Verwaltungsschale bzw. der digitale Zwilling dem realen Objekt eine Storage-Attestation-Information (SAI) bereit. Eine SAI ist eine kryptographisch geschützte Bestätigung, die die durch den digitalen Zwilling übernommenen Ereignisdaten, insbesondere Logeinträge, referenziert. Die Referenz auf einen Logeintrag ist vorzugsweise ein kryptographischer Hash-Wert, der abhängig vom Inhalt eines bestätigten Logeintrags ermittelt wird. Optional kann er weiterhin auch abhängig von Meta-Daten eines Logeintrags, insbesondere Kategorie und/oder Zeitstempel und/oder abhängig von weiteren Daten insbesondere einem Zählerwert oder einer Firmware-Versionsinformation des realen Objekts gebildet werden.

Die SAI kann von einem digitalen Zwilling unmittelbar nach erfolgreichem Empfang mit der Empfangsbestätigung bereitgestellt werden. Vorzugsweise wird die Bestätigung aber mit einer Übereinstimmungsbestätigung erst dann bereitgestellt, wenn der digitale Zwilling die empfangenen Logdaten in einer Datenbank oder in einem Filesystem abgespeichert hat und erfolgreich überprüft hat, dass die in der Datenbank oder in dem Filesystem abgespeicherten Logdaten tatsächlich mit den empfangenen Logdaten übereinstimmen.

Alternativ oder zusätzlich wird die Bestätigung erst versandt, wenn die Verwaltungsschale erfolgreich geprüft hat, dass die Ereignisdaten in einer Lückenlosen vollständigen Form vorliegen.

Weiterhin kann die SAI erst dann bereitgestellt werden, wenn von der Datenbank eine Transaktion erfolgreich durchgeführt wurde. Dabei kann es sich in einem Spezialfall um eine verteilte Datenbank, insbesondere einen Distributed Ledger oder eine Blockchain-Infrastruktur handeln. Erst nachdem die Transaktion, die die Logdaten umfasst, durch einen Block der verteilten DLT-/Blockchain-Datenbank bestätigt ist, wird die SAI bereitgestellt. Dieser Aspekt ist insbesondere vorteilhaft, wenn eine Juridical Recorder-Funktionalität verteilt realisiert wird (d.h. unter Nutzung von DLT/Blockchain-Technologie). Dadurch wird gewährleistet, dass die Logdaten zu jedem Zeitpunkt vollständig sind, da sie zumindest entweder noch auf der bereitstellenden Komponente oder schon innerhalb der verteilt als DLT/Blockchain realisierten Juridical-Recorder-Funktion vorliegen.

Die SAI enthält dabei vorzugsweise folgende Informationen:

- Identifikation des digitalen Zwillings (z.B., UUID, Seriennummer und Aussteller des zugehörigen Zertifikates, Fingerprint des Zertifikates) und ggf. weitere Informationen zum digitalen Zwilling wie Softwareversion, Patch Level oder auch das Ergebnis eines Security Checks.
- Identifikation des realen Objektes (z.B., UUID, Seriennummer und Aussteller des zugehörigen Zertifikates, Fingerprint des Zertifikates) und ggf. weitere Informationen zum realen Objekt wie Firmware Version, Patch Level oder auch das Ergebnis eines Security-Checks-Log-Data-Receipt

    o Zeitstempel des aktuellen Logging-Objektes
    o Fingerprint des bisher kumulierten Logging Objektes CLDRn+1
    o Zeitstempel des vorherigen Logging Objektes
    o Fingerprint des vorherigen kumulierten Logging Objektes CLDRn

- Informationen zum Management der gespeicherten Logging-Informationen (z.B. Informationen zur verschlüsselten Speicherung, Speicherdauer, Backup)

Die SAI ist mit einem privaten Schlüssel des digitalen Zwillings digital signiert und wird in Form eines Log Data Storage Response (LDSRes) dem realen Objekt über ein Kommunikationsprotokoll (z.B. ssh, http, ftp, sftp, TLS) zur Verfügung gestellt.

Der Fingerprint über die bisherigen kumulierten Logging Objekte CLDR stellt dabei eine Verkettung eines neuen Logging-Objektes mit einem existierenden Logging-Objekt dar. Dies kann über eine Hashfunktion realisiert werden. Beispiele für Hashfunktionen sind dabei SHA-256 oder SHA-512.

$$CLDRn+1 = hash(LDRn \ || \ CLDRn), \ CLDR \ (n=0) = Startwert$$

Das reale Objekt und auch der digitale Zwilling berechnen dabei den Fingerprint des aktuellen (CLDRn+1) und vorherigen (CLDRn) kumulierten Logging-Objektes und tauschen diese digital signiert in Form eines LDS (vom realen Objekt) und dem SAI (vom digitalen Zwilling) aus. Da beide Seiten die jeweiligen Informationen verifizieren, kann eine Lücke in der Speicherung der Logging-Objekte rechtzeitig detektiert werden. Eine erfolgreich verifizierte SAI durch das reale Objekt stellt damit das Signal zum Löschen der lokal gespeicherten Logging Daten bereit.

In einer weiteren Weiterbildung der Erfindung wird für das Prüfen der Verschlüsselung der kryptographisch geschützten Ereignisdaten in Abhängigkeit des Vertrauensverhältnisses ein öffentlicher Schlüssel des realen Objekts verwendet.

In einer weiteren Weiterbildung der Erfindung werden Empfangsbestätigung, Vollständigkeitsbestätigung und/oder Übereinstimmungsbestätigung zusätzlich automatisch an ein weiteres Überwachungssystem, auch als Monitoring System bezeichenbar, verteilt und dort archiviert. Dies kann entweder direkt durch die Verwaltungsschale erfolgen oder durch das reale Objekt jeweils nach Empfang der entsprechenden Bestätigungen.

Die Erfindung umfasst außerdem eine Verwaltungsschale eines realen Objekts, ausgebildet ein erfindungsgemäßes Verfahren auszuführen, aufweisend:

- Ein Sicherheitsmodul, ausgebildet ein Vertrauensverhältnis zwischen dem realen Objekt und der Verwaltungsschale aufzubauen,
- ein Empfangsmodul, ausgebildet kryptographisch geschützte Ereignisdaten von dem realen Objekt zu empfangen, wobei die kryptographisch geschützten Ereignisdaten eine zusammenhängende Folge an Ereignissen angeben,
- ein Kryptographieverarbeitungseinheit, ausgebildet einen Integritätsschutz der kryptographisch geschützten Ereignisdaten in Abhängigkeit des Vertrauensverhältnisses zu prüfen und diese gegebenenfalls außerdem zu entschlüsseln,
- ein Speichermodul, ausgebildet die Ereignisdaten in Abhängigkeit eines Ergebnisses des Prüfens zu speichern und
- ein Sendemodul, ausgebildet eine kryptographisch geschützte Empfangsbestätigung an das reale Objekt zu senden, wobei die Empfangsbestätigung angibt, dass die kryptographisch geschützten Ereignisdaten von der Verwaltungsschale empfangen wurden.

Zusammengefasst bietet die Erfindung den Vorteil, dass ein reales Objekt die im laufenden Betrieb angefallenen Logging-Informationen an einen digitalen Zwilling auslagern kann und dazu eine kryptographisch gesicherte Bestätigung in Form einer SAI erhält, die eine Speicherfreigabe auf dem realen Objekt für den belegten Logging-Speicher ermöglicht. Dies ermöglicht eine effiziente Nutzung des Speichers auf dem realen Objekt, unter der Berücksichtigung, dass Logging-Informationen für eine spätere Überprüfung eines Audit Trails oder einer forensischen Analyse über den digitalen Zwilling zur Verfügung gestellt werden.

Durch die Zuordnung kryptographischer Schlüssel im Rahmen des aufgebauten Vertrauensverhältnisses wird zudem ein "Binding" von Verwaltungsschale und realem Objekt realisiert, welches verhindert, dass eine Verwaltungsschale nachträglich einem gefälschten realen Objekt zugeordnet werden kann.

KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

Es zeigt

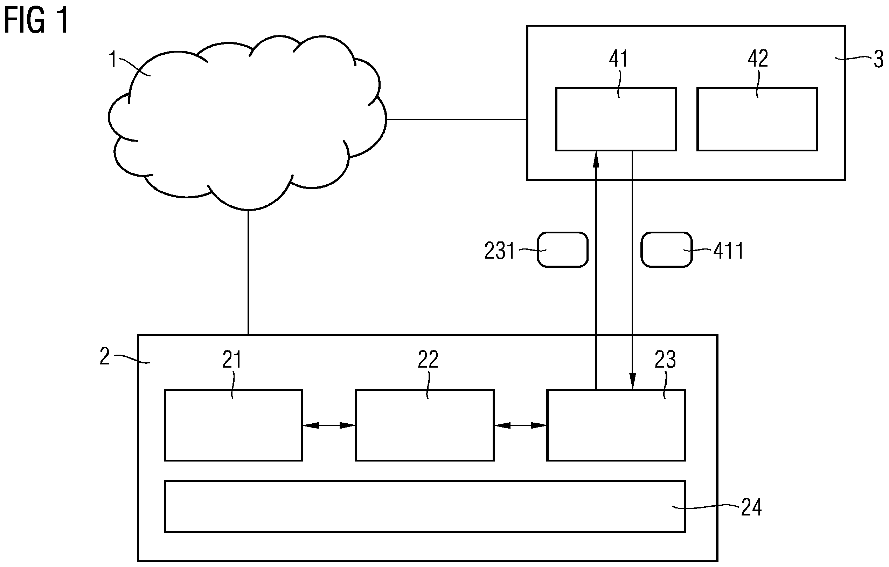

Fig. 1    ein reales Objekt und eine zugehörige Verwaltungsschale.

DETAILLIERTE BESCHREIBUNG DER ERFINDUNG

Fig. 1 zeigt eine mögliche Aufführung der Erfindung. Das reale Objekt 2 ist mit einem assoziierten digitalen Zwilling 41 bzw. einer Verwaltungsschale 41 in einem Cloud-Backend 3 über ein Netzwerk 1 verbunden. Das Cloud-Backend 3 kann weitere digitale Zwillinge 42 anderer Geräte aufweisen.

Das reale Objekt 2 beinhaltet eine Firmware 24 und eine oder mehrere Applikationen 21, auch als Operative Apps 21 bezeichenbar, die die eigentliche Funktion des realen Objekts 2 ausführen.

Die dabei entstehenden Logging-Informationen werden in einem Logging-Speicher 22 gespeichert.

Der Logging-Speicher wird durch eine Management Funktion 23 überwacht.

Wird ein Schwellwert erreicht, generiert die Management Funktion 23 eine Logging Data Struktur (LDS) 231 basierend auf dem bisher aufgelaufenen Logging-Informationen. Nach Erstellung und digitalen Signatur der LDS Struktur 231 erstellt die Management Funktion 23 einen Log Data Storage Request (LDSReq) an den digitalen Zwilling 41.

Der digitale Zwilling 41 empfängt die Anfrage und verifiziert die enthaltenen Daten (Prüfung der digitalen Signatur sowie des enthaltenen kumulierten Fingerprints der bisher aufgelaufenen Logging-Informationen CLDRn mit den auf dem digitalen Zwilling 41 vorhandenen Informationen.

Weiterhin berechnet der digitale Zwilling 41 den Hashwert über die aktuellen gelieferten Logging-Informationen LDRn und berechnet damit den aktuellen kumulierten Fingerprint der gespeicherten Logdaten CLDRn+1. Der digitale Zwilling 41 fügt dann die Informationen in einer Storage-Attestation-Information (SAI) Datenstruktur 411 zusammen, die ebenfalls digital signiert wird.

Die SAI 411 wird der Management Funktion 23 des realen Objektes 2 als Log Data Storage Response (LDSRes) zur Verfügung gestellt.

Das reale Objekt 2 führt die Prüfung der digitalen Signatur sowie der enthaltenen kumulierten Hashwerte CLDRn und CLDRn+1 aus und wird im positiven Fall den entsprechenden Speicherbereich im Logging-Speicher 22 freigeben. Die SAI 411 wird bis zur nächsten Auslagerung von Logging Informationen in der Management Funktion 23 des realen Objekts 2 gespeichert. Aus der SAI 411 wird der entsprechende CLDR zur Generierung der nächsten LDSReq genutzt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

**Patentansprüche**

1. Verfahren zum Verwalten von Ereignisdaten eines realen Objekts (2) durch eine Verwaltungsschale (41) des realen Objekts (2), wobei die Verwaltungsschale (41) einen digitalen Zwilling (41) des realen Objekts (2) darstellt, wobei das Verwalten die Schritte aufweist:

   - Ein Aufbauen eines Vertrauensverhältnisses zwischen dem realen Objekt (2) und der Verwaltungsschale (41) des realen Objekts (2),
   - Ein Abruf von Ereignisdaten von einem Speicher (22) des realen Objekts (2), wobei die Ereignisdaten eine zusammenhängende Folge an Ereignissen angeben,
   - Ein Erstellen eines Integritätsschutz der Ereignisdaten in Abhängigkeit des Vertrauensverhältnisses wodurch kryptographisch geschützte Ereignisdaten (231) gebildet werden,
   - Ein Senden der kryptographisch geschützten Ereignisdaten (231) an die Verwaltungsschale (41),
   - Ein Empfangen einer kryptographisch geschützten Empfangsbestätigung (411) von der Verwaltungsschale (41), wobei die Empfangsbestätigung (411) angibt, dass die kryptographisch geschützten Ereignisdaten (231) von der Verwaltungsschale (41) empfangen wurden und
   - Ein Löschen der Ereignisdaten (231) aus dem Speicher (22) des realen Objekts (2) in Abhängigkeit der Empfangsbestätigung (411).

2. Verfahren nach einem der vorhergehenden Ansprüche,
   wobei die kryptographisch geschützten Ereignisdaten zusätzlich eine Verschlüsselung aufweisen, welche von dem Vertrauensverhältnis abhängig ist.

3. Verfahren nach einem der vorhergehenden Ansprüche,

   wobei das Vertrauensverhältnis auf mindestens einem zugeordneten kryptographischen Schlüsselpaar basiert, wobei das mindestens eine kryptographische Schlüsselpaar einen privaten Schlüssel und einen öffentlichen Schlüssel aufweist, wobei für den Integritätsschutz der kryptographisch geschützten Ereignisdaten insbesondere der private Schlüssel verwendet wird,
   wobei das mindestens eine kryptographische Schlüsselpaar insbesondere eine das reale Objekt (2) betreffende spezifische Granularität aufweist.

4. Verfahren nach einem der vorhergehenden Ansprüche,
mit dem weiteren Schritt:

- Ein Empfangen

o einer kryptographisch geschützten Vollständigkeitsbestätigung bezüglich der kryptographisch geschützten Ereignisdaten (231) von der Verwaltungsschale und/oder
o einer kryptographisch geschützten Übereinstimmungsbestätigung bezüglich der kryptographisch geschützten Ereignisdaten (231) von der Verwaltungsschale und

- Ein Löschen der gesendeten Ereignisdaten von dem Speicher (22) in Abhängigkeit

o der Vollständigkeitsbestätigung und/oder
o der Übereinstimmungsbestätigung.

5. Verfahren nach einem der vorhergehenden Ansprüche,
wobei die kryptographisch geschützten Ereignisdaten (231):

- Eine Trace-Information und/oder
- Eine Logging-Information und/oder
- Eine Nutzungsinformation und/oder
- Eine Verbrauchsinformation und/oder
- Eine Audit-Trail-Information und/oder
- Eine Information bezüglich eines sicherheitsrelevanten Ereignisses
sind.

6. Verfahren nach einem der vorhergehenden Ansprüche,
wobei die kryptographisch geschützten Ereignisdaten (231) in einer Logging Data Struktur (LDS) vorliegen.

7. Verfahren nach einem der vorhergehenden Ansprüche,
wobei der Speicher (22) des realen Objekts (2) zusätzlich zweite Ereignisdaten speichert.

8. Verfahren nach einem der vorhergehenden Ansprüche,
mit dem weiteren Schritt:

- Ein Prüfen einer Signatur und/oder einer Information der kryptographisch geschützten Empfangsbestätigung (411) durch das reale Objekt (2).

9. Reales Objekt (2), insbesondere ausgebildet als technisches Gerät, eingebettetes System, Maschine oder technische Anlage,
zur Ausführung eines Verfahrens nach einem der Ansprüche 1 bis 8, aufweisend:

- ein Sicherheitselement, ausgebildet ein Vertrauensverhältnis zwischen dem realen Objekt (2) und einer Verwaltungsschale (41) des realen Objekts (2) aufzubauen,
- eine Speichereinheit (22), ausgebildet Ereignisdaten des realen Objekts (2) zu speichern, wobei die Ereignisdaten eine zusammenhängende Folge an Ereignissen angeben,
- eine Kryptographieverarbeitungseinheit (23), ausgebildet die Ereignisdaten in Abhängigkeit des Vertrauensverhältnisses zu signieren und insbesondere zu verschlüsseln, wodurch kryptographisch geschützte Ereignisdaten (231) gebildet werden,
- eine Sendeeinheit (23), ausgebildet die kryptographisch geschützten Ereignisdaten (231) an die Verwaltungsschale (41) zu senden,
- eine Empfangseinheit (23), ausgebildet eine kryptographisch geschützte Empfangsbestätigung (411) von der Verwaltungsschale (41) zu empfangen, wobei die Empfangsbestätigung (411) angibt, dass die kryptographisch geschützten Ereignisdaten (231) von der Verwaltungsschale (41) empfangen wurden und
- eine Freigabeeinheit, ausgebildet die Ereignisdaten von dem Speicher (22) in Abhängigkeit der Empfangsbestätigung (411) zu löschen.

10. Verfahren zum Verwalten von Ereignisdaten eines realen Objekts (2) durch eine Verwaltungsschale (41) des realen Objekts (2), wobei die Verwaltungsschale (41) einen digitalen Zwilling (41) des realen Objekts (2) darstellt, wobei das Verwalten die Schritte umfasst:

- Ein Aufbauen eines Vertrauensverhältnisses zwischen dem realen Objekt (2) und der Verwaltungsschale (41) des realen Objekts (2),
- Ein Empfangen von kryptographisch geschützten Ereignisdaten (231) von dem realen Objekt (2) durch die Verwaltungsschale (41), wobei die kryptographisch geschützten Ereignisdaten (231) eine zusammenhängende Folge an Ereignissen angeben,
- Ein Prüfen eines Integritätsschutzes der kryptographisch geschützten Ereignisdaten (231) in Abhängigkeit des Vertrauensverhältnisses,
- Ein Speichern der Ereignisdaten in Abhängigkeit eines Ergebnisses des Prüfens und
- Ein Senden einer kryptographisch geschützten Empfangsbestätigung (411) von der Verwaltungsschale (41) an das reale Objekt (2), wobei die Empfangsbestätigung (411) angibt, dass die kryptographisch geschützten Ereignisdaten (231) von der Verwaltungsschale (41) empfangen wurden.

**11.** Verfahren nach Anspruch 11,
wobei von der Verwaltungsschale (41) eine Auswertung der kryptographisch geschützten Ereignisdaten (231) vorgenommen wird.

**12.** Verfahren nach einem der Ansprüche 11 oder 12,
mit dem weiteren Schritt:

- Ein Prüfen

o einer Vollständigkeit der kryptographisch geschützten Ereignisdaten (231) und/oder
o einer Übereinstimmung der kryptographisch geschützten Ereignisdaten (231) und

- in Abhängigkeit des Prüfens ein Senden

o einer kryptographisch geschützten Vollständigkeitsbestätigung und/oder
o einer kryptographisch geschützten Übereinstimmungsbestätigung.

**13.** Verfahren nach Anspruch 12,
wobei die Empfangsbestätigung und/oder die Vollständigkeitsbestätigung und/oder die Übereinstimmungsbestätigung an das reale Objekt und/oder ein Überwachungssystem gesendet werden.

**14.** Verfahren nach einem der Ansprüche 10 bis 13,
wobei für das Prüfen der Verschlüsselung der kryptographisch geschützten Ereignisdaten (231) in Abhängigkeit des Vertrauensverhältnisses ein öffentlicher Schlüssel des realen Objekts (2) verwendet wird.

**15.** Verwaltungsschale (41) eines realen Objekts (2), ausgebildet ein Verfahren nach einem der Ansprüche 10 bis 14 auszuführen, aufweisend:

- Ein Sicherheitsmodul, ausgebildet ein Vertrauensverhältnis zwischen dem realen Objekt (2) und der Verwaltungsschale (41) aufzubauen,
- ein Empfangsmodul, ausgebildet kryptographisch geschützte Ereignisdaten (231) von dem realen Objekt (2) zu empfangen, wobei die kryptographisch geschützten Ereignisdaten (231) eine zusammenhängende Folge an Ereignissen angeben,
- eine Kryptographieverarbeitungseinheit, ausgebildet einen Integritätsschutz der kryptographisch geschützten Ereignisdaten (231) in Abhängigkeit des Vertrauensverhältnisses zu prüfen,
- ein Speichermodul, ausgebildet die Ereignisdaten in Abhängigkeit eines Ergebnisses des Prüfens zu speichern und
- ein Sendemodul, ausgebildet eine kryptographisch geschützte Empfangsbestätigung (411) an das reale Objekt (2) zu senden, wobei die Empfangsbestätigung (411) angibt, dass die kryptographisch geschützten Ereignisdaten (231) von der Verwaltungsschale (41) empfangen wurden.

FIG 1

EP 4 261 726 A1

**Europäisches Patentamt**
**European Patent Office**
**Office européen des brevets**

## EUROPÄISCHER RECHERCHENBERICHT

**Nummer der Anmeldung**

**EP 22 16 7813**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/354922 A1 (BERTI JOSEPH G [US] ET AL) 21. November 2019 (2019-11-21) * Absätze [0051] – [0074], [0092], [0175] – [0167] * | 1-15 | INV. G06F21/64 H04L9/32 H04L9/00 G06F21/60 |
| Y | US 2018/198604 A1 (HAYTON RICHARD [GB] ET AL) 12. Juli 2018 (2018-07-12) * Absätze [0001] – [0022]; Abbildungen 5-6 * | 1-15 | G06F21/62 G06F3/06 |
| Y | US 2019/065733 A1 (FOREHAND MONTY AARON [US]) 28. Februar 2019 (2019-02-28) * Absätze [0003], [0039] – [0043]; Abbildungen 1-2 * | 1-15 | |

**RECHERCHIERTE SACHGEBIETE (IPC)**

G06F
H04L

Der vorliegende Recherchenbericht wurde für alle Patentansprüche erstellt

| Recherchenort | Abschlußdatum der Recherche | Prüfer |
|---|---|---|
| München | 9. September 2022 | Kerschbaumer, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 22 16 7813

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-09-2022

| Im Recherchenbericht angeführtes Patentdokument | Datum der Veröffentlichung | Mitglied(er) der Patentfamilie | Datum der Veröffentlichung |
|---|---|---|---|
| US 2019354922 A1 | 21-11-2019 | KEINE | |
| US 2018198604 A1 | 12-07-2018 | CN 108337239 A | 27-07-2018 |
| | | EP 3346415 A2 | 11-07-2018 |
| | | EP 3591564 A1 | 08-01-2020 |
| | | GB 2558688 A | 18-07-2018 |
| | | JP 7060362 B2 | 26-04-2022 |
| | | JP 2018121328 A | 02-08-2018 |
| | | US 2018198604 A1 | 12-07-2018 |
| US 2019065733 A1 | 28-02-2019 | CN 109426868 A | 05-03-2019 |
| | | EP 3451257 A1 | 06-03-2019 |
| | | US 2019065733 A1 | 28-02-2019 |

EPO FORM P0461

Für nähere Einzelheiten zu diesem Anhang : siehe Amtsblatt des Europäischen Patentamts, Nr.12/82